# DEMANDE DE BREVET EUROPEEN

(11) **EP 0 721 854 A1**
(43) Date de publication de la demande: **17.07.1996**
(21) Numéro de dépôt: 96400018.6
(22) Date de dépôt: 04.01.1996
(51) Int. Cl.: B60C 17/04, B60C 17/06, B29C 45/14

(54) **Dispositif de roulage à plat pour véhicule automobile et son procédé de fabrication**

(30) Priorité: 05.01.1995 FR 9500064
(71) Demandeur: HUTCHINSON, F-75008 Paris (FR)
(72) Inventeur: Nicolas, Olivier, F-92240 Malakoff (FR)
(74) Mandataire: Ramey, Daniel

(57) **Abrégé**

Dispositif de roulage à plat pour un véhicule automobile, tel notamment qu'un véhicule de tourisme, comprenant une pièce annulaire (14) en matière plastique rigide qui est serrée sur la jante de la roue et une bande d'élastomère (26) qui recouvre la surface périphérique externe de la pièce (14), cette bande d'élastomère (26) comprenant au moins un élément inextensible (28) qui est noyé dans l'élastomère et qui s'étend sur toute la longueur et toute la largeur de la bande (26).

## Description

L'invention concerne un dispositif de roulage à plat pour un véhicule automobile, tel notamment qu'un véhicule de tourisme, et son procédé de fabrication.

La plupart des véhicules automobiles sont équipés maintenant de pneumatiques sans chambre à air, auxquels on peut associer des dispositifs de roulage à plat qui permettent de parcourir une distance d'au moins 100 kilomètres environ dans des conditions normales de conduite et de sécurité (par exemple à une vitesse de 80 à 100 km/h) avec un pneumatique crevé ou dégonflé. Les dispositifs connus de ce type sont cependant assez lourds et assez couteux, de sorte que leur usage a été jusqu'à présent réservé aux véhicules militaires ou à des véhicules blindés transportant des personnalités officielles telles que des chefs d'état ou de gouvernement, des ministres, etc.

L'invention a pour objet un dispositif de ce type, léger et peu coûteux, qui puisse équiper des véhicules automobiles fabriqués en grande série, tels notamment que des véhicules de tourisme ou analogues.

Elle propose, à cet effet, un dispositif de roulage à plat pour véhicule automobile, comprenant, pour chaque roue du véhicule, une pièce annulaire en matière plastique rigide, réalisée en une ou en plusieurs parties et serrée sur la jante de la roue, et une bande d'élastomère recouvrant la surface périphérique extérieure de ladite pièce annulaire, caractérisé en ce qu'il comprend également au moins un élément sensiblement inextensible qui est noyé dans la bande d'élastomère et qui s'étend sur sensiblement toute la longueur et toute la largeur de celle-ci.

Cet élément inextensible peut être une feuille, un ruban ou une tresse métallique, un ruban ou une tresse de matière textile, ou encore une nappe ou une tresse de câblés tels que ceux qui font partie des courroies de transmission de puissance utilisées notamment dans l'industrie automobile et dans l'électroménager.

La présence de cet élément inextensible a pour but d'améliorer beaucoup la résistance en compression de ladite bande d'élastomère et donc d'empêcher ou de réduire fortement les allongements circonférentiels de cette bande d'élastomère quand elle est soumise à une compression radiale par rapport à l'axe du dispositif ou de la roue sur laquelle est monté ce dispositif.

Il en résulte qu'il devient possible de fabriquer le dispositif selon l'invention, non pas de façon classique par surmoulage de la bande d'élastomère sur la pièce annulaire de matière plastique rigide, mais au contraire par surmoulage de la pièce en matière plastique rigide sur la bande d'élastomère.

C'est pourquoi l'invention propose également un procédé de fabrication d'un dispositif de roulage à plat du type précité, ce procédé étant caractérisé en ce qu'il consiste à surmouler la pièce annulaire en matière plastique sur ladite bande d'élastomère préalablement déposée dans un moule.

Avantageusement, cette bande d'élastomère est réalisée préalablement par extrusion de l'élastomère sur le ou les éléments inextensibles.

Le dispositif de roulage à plat, ainsi fabriqué, est de meilleure qualité et a une fiabilité notablement supérieure à celle des dispositifs déjà connus. Corrolairement, il peut être réalisé avec des épaisseurs de matière plus faibles, et donc être plus léger et moins coûteux que les dispositifs connus de la technique antérieure. Il peut de plus être monté sur une jante de type standard, non démontable. L'ensemble de ces avantages permet d'en équiper des véhicules automobiles fabriqués en grande série, notamment les véhicules de tourisme.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique en perspective d'une roue équipée d'un dispositif de roulage à plat selon l'invention;
les figures 2, 3 et 4 sont des vues schématiques partielles en coupe de diverses formes de réalisation du dispositif selon l'invention ;
la figure 5 illustre schématiquement le procédé de fabrication de ce dispositif ;
la figure 6 est une vue partielle agrandie de la figure 5 illustrant schématiquement la distribution de la pression radiale et la déformation de l'élastomère pendant l'injection de la matière plastique.

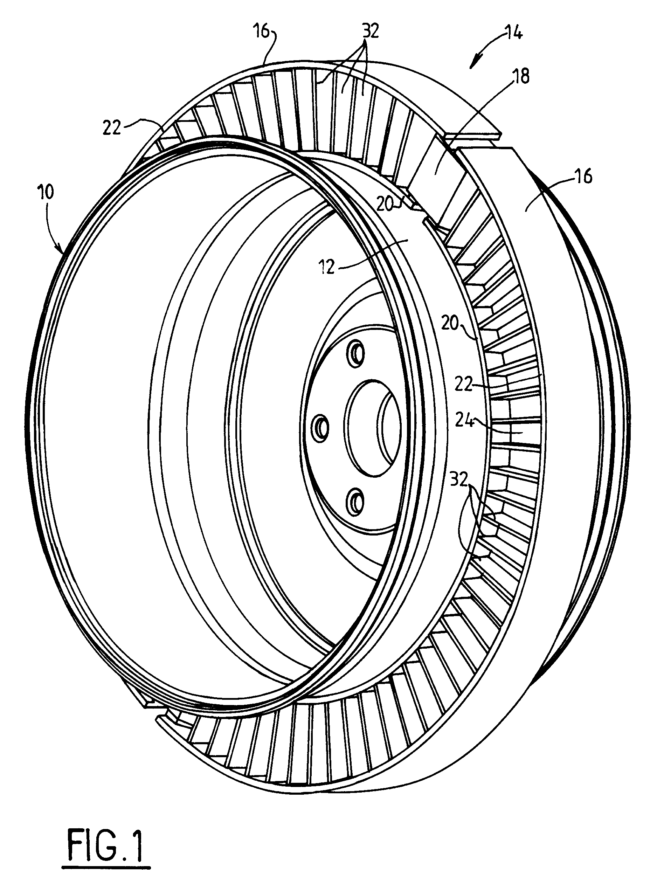

On a représenté en figure 1 une roue 10 de véhicule automobile dont la jante 12 de type standard est équipée d'un dispositif selon l'invention, comprenant essentiellement une pièce annulaire 14 en matière plastique rigide, réalisée en deux parties semi-annulaires identiques 16 dans l'exemple représenté, dont les extrémités en regard sont reliées entre elles par des moyens 18 de fixation et de serrage sur la jante 12.

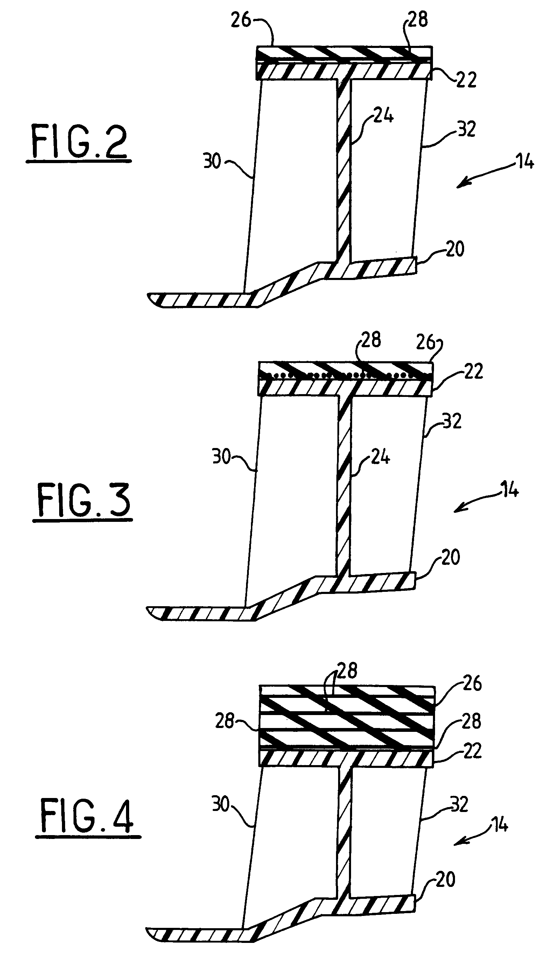

Comme on le voit mieux sur la vue partielle en coupe de la figure 2, la pièce annulaire 14, ou chaque partie 16 de la pièce annulaire 14, a une section sensiblement en I comprenant deux barres transversales 20 et 22 respectivement, reliées entre elles par une âme centrale 24, la barre transversale 20 (qui est radialement interne par rapport à l'axe de la roue 10) ayant un profil adapté à la surface de la jante 12, l'autre barre transversale 22 (qui est radialement externe par rapport à l'axe de la roue) étant droite et recouverte d'une bande 26 d'élastomère (non représentée en figure 1) dans laquelle est noyé un élément 28 sensiblement inextensible qui s'étend sur sensiblement toute la longueur et toute la largeur de ladite bande 26.

En outre, les deux bandes cylindriques 20 et 22 de la pièce 14, ou de ses parties 16, sont reliées entre elles par des ailettes ou nervures 30, 32 qui s'étendent radialement par rapport à l'axe du dispositif ou de la roue de part et d'autre de l'âme centrale 24 et qui sont également reliées à celle-ci, les ailettes 30, 32 étant réparties de façon uniforme autour de l'axe du dispositif ou de la roue et étant séparées les unes des autres d'un intervalle angulaire constant, par exemple de l'ordre de 5°, ces ailettes jouant le rôle de raidisseurs et permettant de rigidifier l'ensemble de la pièce annulaire 14.

Celle-ci est réalisée en une matière thermoplastique technique armée de fibres, par exemple de fibres de verre, en quantité relativement importante de l'ordre de 30 à 40% dans une réalisation particulière de l'invention, les fibres étant de préférence des fibres longues (de 10-15 mm de long) pour améliorer la résistance aux chocs.

La matière thermoplastique utilisée peut être un polyamide 6.6, un polyamide 4.6, un polyamide 6, un polyéthylène, du polypropylène, un polyarylamide, un polyphtalamide, l'une des matière connues sous les abréviations de PBT, de POM, de PPS, ou en général tout thermoplastique semi-cristallin ayant de bonnes caractéristiques mécaniques et de tenue en température.

L'élastomère 26 qui recouvre la bande cylindrique extérieure 22 de la pièce 14 est typiquement en caoutchouc naturel ou en polyisoprène.

L'élément inextensible 28 noyé dans l'élastomère est une feuille, une bande ou un ruban métallique, par exemple d'acier ou d'aluminium, un métal léger étant de préférence utilisé, ou bien peut être une bande, un ruban ou une tresse inextensible de matière textile, l'épaisseur de cet élément étant d'environ 0,1 à 0,5 mm.

Dans l'exemple de réalisation de la figure 3, cet élément inextensible 28 est constitué par une nappe ou une tresse de câblés du même type que ceux qui sont utilisés dans les courroies de transmission de puissance réalisées pour l'industrie automobile ou celle de l'électroménager.

Dans la forme de réalisation de la figure 4, la bande d'élastomère 26 est d'épaisseur beaucoup plus importante que dans les modes de réalisation des figures 2 et 3 et comprend alors plusieurs éléments inextensibles 28 qui sont noyés dans l'élastomère et qui s'étendent parallèlement les uns aux autres et à la bande cylindrique extérieure 22 de la pièce 14, ces éléments inextensibles 28 étant séparés les uns des autres par des couches d'élastomère de même épaisseur et étant dans ce cas des feuilles ou des rubans à surface continue pour éviter toute communication entre les couches d'élastomère de part et d'autre d'un élément inextensible 28.

Comme on le voit bien sur les figures 2, 3 et 4, l'élément inextensible 28 qui se trouve le plus proche de la bande cylindrique extérieure 22 de la pièce 14 est séparé de celle-ci par une couche d'élastomère beaucoup plus mince que celle qui sépare l'élément 28 de la surface périphérique extérieure du dispositif (cas des figures 2 et 3) ou d'un autre élément inextensible 28 placé radialement à l'extérieur du premier (cas de la figure 4).

Typiquement, les épaisseurs de matière plastique formant les bandes cylindriques 20 et 22 et l'âme centrale 24 de la pièce annulaire 14 sont de quelques millimètres, par exemple de 5 mm environ, l'épaisseur de la bande d'élastomère 26 est de l'ordre de 5 mm par exemple dans les réalisations des figures 2 et 3 et de 20 mm environ dans le mode de réalisation de la figure 4, l'épaisseur d'élastomère comprise entre la bande cylindrique extérieure 22 de la pièce 14 et l'élément inextensible 28 le plus proche étant dans ce cas de l'ordre d'un millimètre, et l'épaisseur comprise entre deux éléments 28 étant de 4 à 6 mm environ.

Comme cela ressort clairement des figures 2, 3 et 4, la hauteur ou dimension radiale du dispositif selon l'invention est sensiblement constante quelle que soit l'épaisseur de la bande d'élastomère 26, et peut être de l'ordre de 50% au moins de la hauteur interne nominale du pneumatique, c'est-à-dire de la distance radiale entre la jante 12 de la roue et la face interne de la partie de sommet du pneumatique.

Le dispositif selon l'invention est avantageusement réalisé de la façon suivante:
la bande d'élastomère 26 comprenant le ou les éléments inextensibles 28 est tout d'abord réalisée par extrusion de l'élastomère sur le ou les éléments inextensibles 28, puis par vulcanisation.

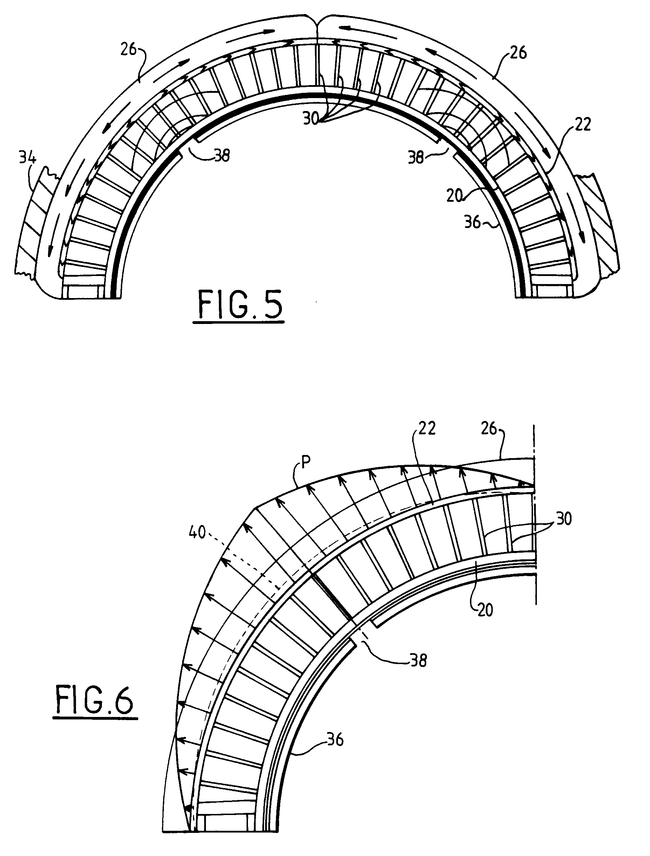

La bande ainsi obtenue est découpée à longueur et disposée dans un moule d'injection de la matière plastique destinée à former la pièce 14 ou les parties 16 de celle-ci, ce moule ayant une forme semi-annulaire s'étendant sur 180° dans le mode de réalisation de la figure 5 qui correspond au cas où la pièce annulaire 14 est formée de deux parties 16 semi-annulaires identiques reliées bout à bout par des moyens de fixation et de serrage.

On peut placer dans le moule de la figure 5 soit une longueur de bande 26 d'élastomère s'étendant sur sensiblement 180° à l'intérieur du moule, soit deux bandes 26 juxtaposées s'étendant chacune sur environ 90°.

La ou les bandes 26 sont placées en appui sur la paroi radialement externe 34 du moule, dont la paroi radialement interne 36 comprend deux orifices 38 d'injection de la matière plastique, qui sont séparés angulairement l'un de l'autre de 90° environ et qui sont situés à 45° environ des extrémités du moule.

La face interne de la bande 26, destinée à être en contact avec la matière plastique formant les parties 16 de la pièce 14, est revêtue si nécessaire d'un agent d'adhérence entre l'élastomère et la matière plastique, tel notamment que du "CHEMOSIL" ou un produit du même type.

La matière plastique est injectée par les orifices 38 à une pression élevée de plusieurs centaines de bars et exerce sur la ou les bande 26 d'élastomère un effort tangentiel ou circonférentiel qui tend à déplacer et à allonger la ou les bandes 26 d'élastomère.

On a représenté schématiquement en figure 6 le diagramme de la pression radiale P exercée sur la bande 26 d'élastomère par la matière plastique injectée, et en 40 la déformation de la face radialement interne de la bande d'élastomère 26 qui ne comprendrait pas le ou les éléments inextensibles 28. C'est au niveau de l'orifice d'injection 38 que les pressions radiales exercées sur la bande 26 sont les plus élevées et que l'épaisseur de celle-ci serait la plus faible, tandis qu'à 45° de part et d'autre de l'orifice d'injection 38 les pressions radiales sont les plus faibles et l'épaisseur de la bande 26 serait supérieure à son épaisseur nominale (l'élastomère n'étant pas une matière compressible de sorte que sa variation d'épaisseur se traduit par un déplacement de matière et non par une réduction de volume), ce qui aurait pour conséquence de faire varier de façon relativement importante l'épaisseur de la bande cylindrique périphérique 22 de la pièce annulaire 14 ou de ses parties 16 et se traduirait par un défaut de circularité de la pièce 14.

Ce phénomène est contrarié, selon l'invention, par la présence du ou des éléments inextensibles 28 qui sont noyés dans la ou les bandes d'élastomère 26 et qui s'opposent à toute extension de celles-ci, aussi bien dans le sens circonférentiel que dans le sens axial (perpendiculairement au plan du dessin). L'inextensibilité ou la quasi-inextensibilité de la bande d'élastomère 26 permet de mouler les parties 16 de la pièce annulaire 14 par injection de matière plastique sous pression élevée, en conservant une bonne précision dimensionnelle.

Après injection et refroidissement de la matière plastique injectée, les pièces sont démoulées de façon classique.

Leur montage sur une roue est des plus simples, puisqu'il suffit de disposer les deux parties 16 de la pièce 14, revêtues chacune d'une bande d'élastomère 26, sur la jante de la roue et de les assembler et de les serrer sur la jante de la roue au moyen des dispositifs de fixation 18 qui peuvent être de tout type approprié.

On monte ensuite, de la façon habituelle, un pneumatique sur la roue ainsi équipée.

De préférence, la surface périphérique externe de la bande 26 d'élastomère, ou la surface correspondante du pneumatique, est revêtue d'une couche de lubrifiant permettant de faciliter un glissement relatif de la surface interne du pneumatique sur le dispositif selon l'invention. Ce lubrifiant peut être un gel très visqueux ayant un point de fusion élevé, par exemple du type polypropylène-glycol, commercialisé actuellement par la Société TOTAL, ou tout autre produit équivalent. On évite ainsi un frottement intense du dispositif selon l'invention sur la surface interne du pneumatique, qui résulterait de leur différentiel de longueur ou de périmètre, et on évite une destruction relativement rapide du pneumatique.

Le dispositif selon l'invention permet de parcourir avec un pneumatique crevé ou dégonflé une distance importante, supérieure à 100 km à vitesse élevée. Ce dispositif a typiquement un poids de l'ordre de 3 kg par roue, pour un coût faible, ce qui permet d'en équiper des véhicules fabriqués en grande série, tels notamment que les véhicules de tourisme.

## Revendications

1. Dispositif de roulage à plat pour un véhicule automobile, comprenant, pour chaque roue du véhicule, une pièce annulaire (14) en matière plastique rigide, réalisée en une ou plusieurs parties (16) et serrée sur la jante (12) de la roue, et une bande d'élastomère (26) recouvrant la surface périphérique extérieure de ladite pièce (14), caractérisé en ce qu'il comprend également au moins un élément sensiblement inextensible (28) qui est noyé dans la bande d'élastomère et qui s'étend sur sensiblement toute la longueur et toute la largeur de celle-ci.

2. Dispositif selon la revendication 1, caractérisé en ce que l'élément inextensible (28) est une feuille, un ruban ou une tresse métallique, un ruban ou une tresse de matière textile, ou une natte ou tresse de câblés.

3. Dispositif selon la revendication 1 ou 2, caractérisé en ce que la bande d'élastomère (26) comprend plusieurs éléments inextensibles (28) précités, parallèles entre eux et séparés les uns des autres par des couches d'élastomère.

4. Dispositif selon la revendication 3, caractérisé en ce qu'une couche d'élastomère séparant deux éléments inextensibles (28) parallèles a une épaisseur de l'ordre de 4 à 6 mm environ.

5. Dispositif selon l'une des revendications précédentes, caractérisé en ce que ladite pièce annulaire (14) a une section sensiblement en I formée de deux barres ou bandes parallèles (20, 22) reliées entre elles par une âme centrale (24) et par des ailettes (30, 32) qui s'étendent radialement par rapport à l'axe de ladite pièce (14) de part et d'autre de l'âme centrale (24) et qui sont raccordées à celle-ci.

6. Dispositif selon l'une des revendications précédentes, caractérisé en ce que ladite pièce annulaire (14) est en thermoplastique technique armé de fibres, tel qu'un polyamide 6, 6.6 ou 4.6, un polyéthylène, un polypropylène, un polyarylamide, un polyphtalamide, du PBT, du POM, du PPS ou un autre thermoplastique semi-cristallin ayant de bonnes propriétés mécaniques et une bonne tenue en température.

7. Dispositif selon l'une des revendications précédentes, caractérisé en ce que l'élastomère est un polyisoprène ou un caoutchouc naturel et est fixé sur la surface périphérique extérieure de la pièce annulaire (14) par un film d'agent adhésif.

8. Dispositif selon l'une des revendications précédentes, caractérisé en ce que la pièce annulaire (14) est réalisée en deux parties (16) de forme semi-annulaire ou semi-cylindrique dont les extrémités sont reliées entre elles par des moyens (18) de fixation et de serrage sur la jante de la roue.

9. Dispositif selon l'une des revendications précédentes, caractérisé en ce qu'il comprend une couche de lubrifiant déposée sur la surface périphérique externe de la bande d'élastomère (26) ou sur la surface périphérique interne correspondante du pneumatique.

10. Procédé de fabrication d'un dispositif de roulage à plat, tel que celui décrit dans l'une des revendications précédentes, caractérisé en ce qu'il consiste à surmouler la pièce annulaire (14) en matière plastique, ou ses parties constitutives (16), sur la bande d'élastomère (26) préalablement déposée dans un moule et comprenant le ou les éléments inextensibles (28) précités.

11. Procédé selon la revendication 10, caractérisé en ce qu'on dépose un film d'adhésif sur la face périphérique interne de ladite bande d'élastomère (26), avant l'injection de matière plastique dans le moule.

12. Procédé selon la revendication 10 ou 11, caractérisé en ce que ladite bande d'élastomère (26) est préalablement réalisée par extrusion d'élastomère sur le ou les éléments inextensibles (28) puis par vulcanisation.
